# EUROPEAN PATENT SPECIFICATION

(11) **EP 2 518 475 B1**
(45) Date of publication and mention of the grant of the patent: **20.04.2016**
(21) Application number: 11164318.5
(22) Date of filing: 29.04.2011
(51) Int. Cl.: G01N 21/64, B82Y 15/00

(54) **Optical gas sensing device**
Optische Gassensorvorrichtung
Dispositif de détection de gaz optique

(43) Date of publication of application: 31.10.2012
(73) Proprietor: OSRAM Opto Semiconductors GmbH, 93055 Regensburg (DE)
(72) Inventor: Ristic, Jelena, 93047 Regensburg (DE); Lefebvre, Pierre, 34070 Montpellier (FR); Straßburg, Martin, 93093 Donaustauf (DE); Bergbauer, Werner, 94336 Windberg (DE)
(74) Representative: Epping - Hermann - Fischer

(56) References cited:
- WO-A1-2010/114198
- US-A1- 2006 134 392
- COMINI E ET AL: "Quasi-one dimensional metal oxide semiconductors: Preparation, characterization and application as chemical sensors", PROGRESS IN MATERIALS SCIENCE, PERGAMON PRESS, GB, vol. 54, no. 1, 1 January 2009 (2009-01-01), pages 1-67, XP025686325, ISSN: 0079-6425, DOI: 10.1016/J.PMATSCI.2008.06.003 [retrieved on 2008-07-10]
- SHAOXIN LU ET AL: "Photoconductivity in single wall carbon nanotube sheets", NANOTECHNOLOGY, IOP, BRISTOL, GB, vol. 17, no. 8, 28 April 2006 (2006-04-28) , pages 1843-1850, XP020104646, ISSN: 0957-4484, DOI: 10.1088/0957-4484/17/8/006
- LEI LUO ET AL: "Local vapor transport synthesis of zinc oxide nanowires for ultraviolet-enhanced gas sensing", NANOTECHNOLOGY, IOP, BRISTOL, GB, vol. 21, no. 49, 10 December 2010 (2010-12-10), page 495502, XP020182266, ISSN: 0957-4484
- CHEN J ET AL: "Large-scale syntheses of uniform ZnO nanorods and ethanol gas sensors application", JOURNAL OF ALLOYS AND COMPOUNDS, ELSEVIER SEQUOIA, LAUSANNE, CH, vol. 509, no. 3, 21 January 2011 (2011-01-21), pages 740-743, XP027501524, ISSN: 0925-8388, DOI: 10.1016/J.JALLCOM.2010.09.043 [retrieved on 2010-11-16]
- FAGLIA G ET AL: "Adsorption effects of NO2 at ppm level on visible photoluminescence response of SnO2 nanobelts", APPLIED PHYSICS LETTERS, AMERICAN INSTITUTE OF PHYSICS, vol. 86, no. 1, 28 December 2004 (2004-12-28), pages 11923-011923, XP012064431, ISSN: 0003-6951, DOI: 10.1063/1.1849832
- E Comini ET AL: "Single crystal ZnO nanowires as optical and conductometric chemical sensor", Journal of Physics D: Applied Physics, vol. 40, no. 23, 16 November 2007 (2007-11-16), pages 7255-7259, XP055214615, ISSN: 0022-3727, DOI: 10.1088/0022-3727/40/23/S08
- LETTIERI S ET AL: "Gas sensitive light emission properties of tin oxide and zinc oxide nanobelts", JOURNAL OF NON-CRYSTALLINE SOLIDS, NORTH-HOLLAND PHYSICS PUBLISHING. AMSTERDAM, NL, vol. 352, no. 9-20, 15 June 2006 (2006-06-15), pages 1457-1460, XP025187590, ISSN: 0022-3093, DOI: 10.1016/J.JNONCRYSOL.2006.02.037 [retrieved on 2006-06-15]

## Description

An optical gas sensing device comprising a gas detecting unit is specified.

Gas sensors typically act either directly or indirectly. Direct methods are based for example on changes in optical absorption, transmission or scattering, mass spectroscopy or gas spectroscopy. As indirect methods, for example, interaction with a chemical indicator, surface of a semiconductor or a ceramic layer are known. The direct methods are rather accurate and selective, but very expensive and not easy to use in situ as gas sampling is necessary. The indirect methods are often non-selective, particularly only sensitive to groups of chemicals rather than to a specific gas, may exhibit non-reversible behavior and are often poisonous.

Additionally, gas sensors comprising nanostructures which undergo conductivity change in response to the gas exposure are known. However, conductivity is difficult to measure due to the complex assessment and electrical contacting of the nanostructures. In addition, such gas sensor can have unfavorable fragility, reproducibility and contamination.

The document "Review of methods of optical gas detection by direct optical spectroscopy, with emphasis on correlation spectroscopy", Optical Chemical Sensors, NATO Science Series II: Mathematics, Physics and Chemistry, 2006, Vol. 224, Part 2, 457 to 477, discloses existing gas sensors.

The document Comini E. et al., "Quasi-one dimensional metal oxide semiconductors: Preparation, characterization and application as chemical sensors" in Progress in Material Sciences, 2009, Vol. 54, pages 1 to 67 refers to gas sensors.

This document (see pages 50-51; section 6.1.6 and 6.1.6.1) concerns metal oxide semiconductors in the form of ZnO or Sn02 nanorods and their application as chemical sensors and discloses that nanowires of ZnO and Sn02 show photoluminescence (PL) spectra at room temperature. This document further discloes that recent work has demonstrated that SnO2 nanowires exhibit interesting gas-sensitive photo-luminescence properties: it was found that exposure to low concentrations of nitrogen dioxide (few ppm concentrations) significantly quenched the visible PL emission of nanowires, which was moreover not affected by variation of relative humidity, and by other interfering gases.

The document Shaoxin Liu et al., "Photoconductivity in single wall carbon nanotube sheets" in Nanotechnology, 2006, Vol. 17, pages 1843 to 1850 refers to nanotubes as sensors.
The document US 2006/0134392 A1 refers to electrical contacts for nanotubes.
One object of the invention is to specify a simple and inexpensive optical gas sensing device having a good sensitivity, reliability and reproducibility.
This problem is solved with an optical gas sensing device comprising the features of claim 1.

The optical gas sensing device comprises a gas detecting unit wherein the gas detecting unit comprises an array of semiconductor based nanostructures, the nanostructures each having a surface which is capable of photo-induced adsorption of gas molecules leading to a change in non-radiative surface-related recombination.
The basic principle of the optical gas sensing device relies on the photoluminescence response of semiconductor-based nanostructures upon their exposure to gases. Advantageously, the sensitivity of nanostructures to gases is much higher than in the case of thin film structures due to the much higher surface to volume ratio as the effect relies on alteration of the surface band bending and non-radiative surface-related recombination mechanism by chemistry adsorption of different gas molecules and gas atoms.

Such a gas sensing device is advantageously simple and inexpensive and has a good sensitivity, reliability and reproducibility. In particular, the nanostructures are optically excited and are used as optical sensing elements and therefore require no additional handling or electrical contacting. Thereby, the sensing device is a low cost and low energy consumption device. The device can be applied for long range applications, particularly mobile applications. In addition, the device is small in dimension and compact. The device is robust and can be used in aggressive and potentially dangerous environments, for example explosive environments. The operation principle of such a sensing device is advantageously reversible with no hysteresis effects. There is no consumption of the analyte. Supplementary, the sensing device is extremely sensitive. As no individual or complex assembly nanostructure handling is required there is no disadvantage regarding fragility and reproducibility.

A nanostructure is a nanoscale object having a diameter on its base which ranges from 1 to 5000 nm, for example 25 to 500 nm, in particular 500 nm or lower, preferably 100 nm or lower. "Diameter" does not necessarily imply that the base of the nanostructures is of round shape. "Diameter" for example also denotes the maximum extension of a nanostructure at its base.

The nanostructure is, for example, a nanorod, a nanocolumn, a nanopyramid or a quantum dot.

According to an example of the gas sensing device, the gas sensing device comprises a semiconductor-based light-emitting diode chip comprising at least one active region which emits electro-magnetic radiation during operation of the light-emitting diode chip.

According to an example of the gas sensing device, the light-emitting diode chip comprises a semiconductor body being, for example, a semiconductor body of a light-emitting diode. The semiconductor is, for example, epitaxially grown on a growth substrate which can be removed from the semiconductor body. The emitted electro-magnetic radiation is, for example, UV-radiation, IR-radiation, blue light or visible light.
At least a part of the electro-magnetic radiation produced in the at least one active region leaves the semiconductor through a top surface. For example, the top surface is the surface of the semiconductor body facing away from a connection carrier or a circuit board on which the semiconductor body is mounted. Preferably, the array of nanostructures faces the top surface of the light-emitting diode chip.

According to an example of the gas sensing device, the semiconductor body is based on an III-V semiconductor compound material or an II-VI compound semiconductor material. In particular, the active region of the semiconductor body can be formed with this semiconductor compound material.

A III-V compound semiconductor material comprises at least one element from the third main group, such as, for example, B, Al, Ga, In, and an element from the fifth main group, such as, for example, N, P, As. In particular, the term "III/V compound semiconductor material" encompasses the group of the binary, ternary or quaternary compounds which contain at least one element from the third main group and at least one element from the fifth main group, for example, nitride and phosphide compound semiconductors. Such a binary, ternary or quaternary compound can additionally comprise, for example, one or more dopants and additional constituents.
Accordingly, a II-VI compound semiconductor material comprises at least one element from the second main group, such as for example Be, Mg, Ca, Sr, Zn, Cd, Hg and one element from the sixth main group, such as for example O, S, Se, Te. In particular, an II-VI compound semiconductor material comprises a binary, ternary or quaternary compound, which comprises at least one element from the second main group and at least one element from the sixth main group. Moreover, such a binary, ternary or quaternary compound may comprise, for example, one or more dopants and additional constituents. The II-VI compound semiconductor materials for example include: ZnO, ZnMgO, CdS, ZnCdS, MgBeO.

According to an example of the gas sensing device, each nanostructure is based on an III-V or an II-VI compound semiconductor material. For example the nanostructures are formed with at least one of the following materials: InGaN, GaN, ZnO.

According to an example of the gas sensing device, the nanostructures are electrically inactive. That is to say the nanostructures are not pumped electrically in order for them to produce light but they are optically pumped with radiation emitted by the light-emitting diode chip through its top surface. The light-emitting diode chip is free of electrical contacts which would contact directly the nanostructures.

According to an example of the present disclosure, the gas sensing device comprises a photodetector detecting the radiation emitted by the light-emitting diode chip and transmitted through the nanostructures during operation of the gas sensing device, wherein the nanostructures are arranged between the light-emitting diode chip and the photodetector.
Light emitted by the light-emitting diode chip couples out through the top surface of the light-emitting diode chip, passes the array of nanostructures and is detected by the photodetector. Thereby, gas molecules being in the environment of the nanostructures are photo-induced adsorbed on the surface of the nanostructures due to the surface properties of the nanostructures. The adsorbing process leads to a non-radiative surface-related recombination at the surface of the nanostructures. Therefore, under presence of gas molecules, the intensity of the light detected by the photodetector is altered.
According to at least one aspect of the gas sensing device, the array of nanostructures and the light-emitting diode chip are monolithically integrated with each other. "Monolithically integrated" means that there is no additional bonding material between the nanostructures and the top surface of the light-emitting diode chip. The nanostructures and the top surface of the light-emitting diode chip are in direct contact with each other without a further element for adherence between them. For example, the nanostructures can be epitaxially grown on the top surface. Thereby, the light-emitting diode chip is used as a carrier or pseudosubstrate for the array of nanostructures.
The growth of the nanostructures can be performed in a self-organized way. Further it is possible to use a mask layer or nucleation sites for the growth of the nanostructures. In this case, seeds for each nanostructure can be formed in openings of the mask layer directly on the top surface. The nanostructures then grow in the region of each seed. The use of a mask layer enables the formation of nanostructures at preselectable positions. This allows for an accurate setting of the density of the nanostructures. The use of a mask layer allows for the production of regular ordered nanostructures.

According to one example of the gas sensing device, the array of nanostructures is arranged on a transparent substrate. Particularly, the substrate is transparent for the light emitted by the light-emitting diode chip. The nanostructures are in this case produced independently from the light-emitting diode chip and transferred to the top surface of the light-emitting diode chip. The substrate comprising the array of nanostructures is then, for example, bonded or glued to the top surface of the light-emitting diode chip.
The substrate is for example an AlN- or sapphire-substrate. The substrate can be attached to the top surface of the light-emitting diode chip. Alternatively, the substrate can be arranged with a distance to the top surface of the light-emitting diode chip.
According to at least one aspect of the gas sensing device, the photodetector is attached to the gas detecting unit with a frame leaving space for gas to be exposed to the nanostructures. For example, the frame can be attached to the transparent substrate extending through the nanostructures.
According to at least one aspect of the gas sensing device, the array of nanostructures comprises at least two different modifications of nanostructures for different gas detection. Therefore, the nanostructures do not have to be identical, but can be modified differently. For example, the nanostructures can be homostructures, heterostructures, core shell structures and/or metal-coated structures. Dependent on their modification, the nanostructures are capable of detecting different gas molecules. The gas molecules are for example nitrogen, oxygen and/or hydrogen.

According to at least one aspect of the gas sensing device, the gas sensing device further comprises a metal film being deposited between at least two of the nanostructures or coating the nanostructures. Preferably, the metal film is deposited between each of the nanostructures. The metal film preferably has a high reflection. For example, the metal film is attached to the substrate in each gap between the nanostructures.
According to at least one aspect of the gas sensing device, the gas sensing device further comprises a heating unit for increasing the operation temperature of the gas sensing device. The heating unit is thermally coupled to the nanostructures. Thereby, it is not necessary to place the heating unit directly to the nanostructures. For example, the heating unit is arranged on the light-emitting diode chip at the opposite side from the nanostructures. Due to the heating unit, the device temperature can be regulated. Thereby, operation of the device at different temperatures which modify the chemical adsorption properties of the nanostructures can advantageously be provided.

According to an example of the present disclosure of the gas sensing device of the invention, an intensity of light being transmitted through the array of nanostructures indicates a gas concentration during operation of the gas sensing device. In particular, the light leads to alteration of the adsorbing process of gas molecules on the surface of the nanostructures which results in the non-radiative surface-related recombination. Thereby, the intensity of light decreases under gas exposure.
In the following, the here described gas sensing device is explained in more detail with regard to the following embodiments of the gas sensing device.

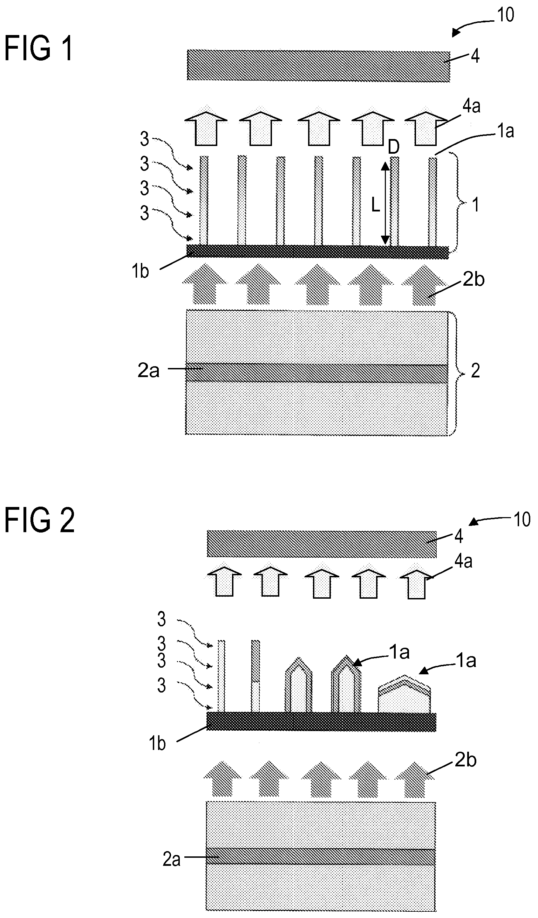

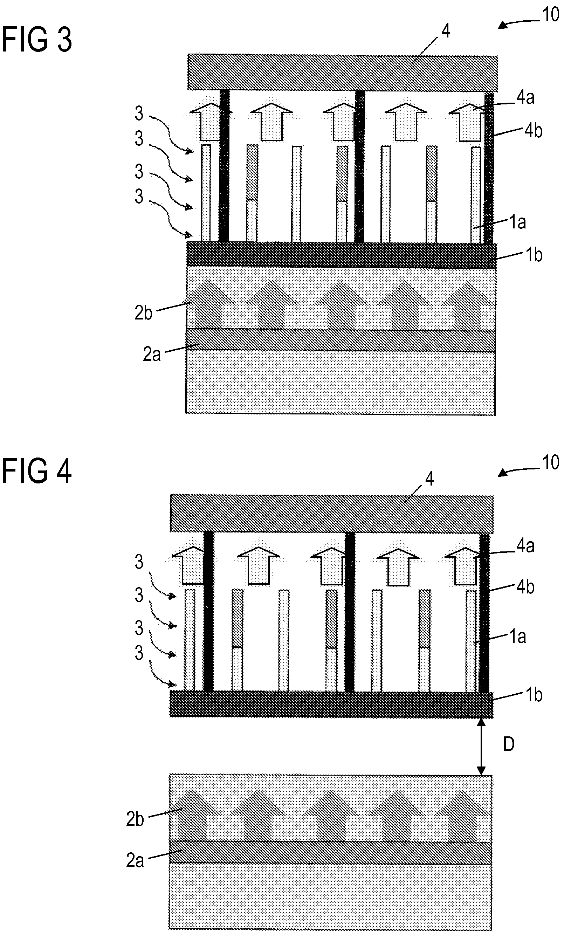

FIG. 3 to 6 show schematic sectional views which are examples of the present disclosure of a here described gas sensing device, respectively, and FIG. 1-2, 7-8 show a schematic sectional view of a modification of a gas sensing device, respectively.

In the examples and the figures, similar or similarly acting constituent parts are provided with the same reference symbols. The elements illustrated in the figures and their size relationships to each other should not be regarded as true to scale. Rather, individual elements may be represented with an exaggerated size for the sake of better representability and/or for the sake of better understanding. The gas sensing device 10 according to the modification of figure 1 comprises a light-emitting diode chip 2 comprising a semiconductor body. The semiconductor body is, for example, grown by MOVPE growth. The semiconductor body comprises an n-doped region, a p-doped region and an active region 2a. The regions are, for example, based on a nitride compound semiconductor material. During operation of the light-emitting diode chip, the active region 2a emits electro-magnetic radiation in the spectral range between UV-radiation and visible light, preferably UV- or blue radiation 2b. The radiation 2b generated in the active region 2a couples out through a top surface of the chip 2.

For example, the light-emitting diode chip is an InGaN LED emitting UV- and/or green/blue light.

The gas sensing device further comprises a gas detecting unit 1 facing the top surface of the chip 2. The gas detecting unit 1 is arranged with a distance to the top surface of the chip 2. The light 2b emitted by the chip 2 couples into the gas detecting unit 1 and optical excites the gas detecting unit 1. The gas detecting unit 1 comprises an array of nanostructures 1a being electrically inactive. Each nanostructure has a diameter D and a length L.

For example, the mean diameter D of all nanostructures 2a is between 2 nm and 5000 nm, preferably 500 nm or lower, especially preferably 100 nm or lower. The length L of each nanostructure 2a is between 2 nm and 5000 nm. Thereby, a high aspect ratio, i.e. length L/diameter D is preferred for increasing the surface area of the nanostructures.

The nanostructure 1a is, for example, a nanorod, a nanocolumn, a nanopyramid or a quantum dot. The nanostructures are based on a semiconductor material, preferably comprising indium. For example, the nanostructures are based on GaN or InGaN.

The nanostructures 1a and the light-emitting diode chip 2 can be monolithically integrated with each other. In this case, the nanostructures are grown directly on the top surface of the chip 2. Thereby, the nanostructures can be formed in a self-organized way, for example by MOVPE growth. Alternatively, the nanostructures can be formed in a position controlled way.

According to FIG. 1, the nanostructures 1a are arranged on a transparent substrate 1b, for example an AlN- or sapphire substrate 1b. The substrate should be transparent to the radiation emitted by the light-emitting diode chip 2.
The gas sensing device further comprises a photodetector 4 detecting the radiation 4a emitted by the light-emitting diode chip 2 and transmitted through the nanostructures 1a during operation of the gas sensing device 10. The nanostructures 1a are arranged between the light-emitting diode chip 2 and the photodetector 4. The photodetector 4 is, for example, a Si diode or GaAs diode being sensitive in the UV and/or blue radiation.
The surface of the nanostructures 1a are capable of photo-induced adsorbing gas molecules 3 which appear in the ambience of the gas sensing device, for example nitrogen, oxygen or hydrogen. The adsorption of the gas molecules 3 on the surface of the nanostructures 1a leads to a non-radiative surface-related recombination. Thereby, the light passing the gas detecting unit 1 is reduced whereby the light detection of radiation by the photodetector decreases.
By means of the gas sensing device, gas concentration of the environment of the device can be detected. In particular, an intensity of light 4a being transmitted through the array of nanostructures 1a indicates a gas concentration 3 during operation of the gas sensing device 10. Thereby, the intensity of light 4a decreases under gas exposure 3. Thus, the light passing the gas detecting unit 1 contains information about gas, i.e. the gas concentration.
Therefore, the basic principle of the optical gas sensing device 10 relies on photoluminescence response of semiconductor based nanostructures 1a upon their exposure to gases. Advantageously, the sensitivity of nanostructures to gases is much higher than in the case of thin film structures due to the much higher surface to volume ratio as the effect relies on alteration of the surface band bending and non-radiative surface-related recombination mechanism by chemistry adsorption of different gas molecules and gas atoms.
Such a gas sensing device 10 is advantageously simple and inexpensive and has a good sensitivity, reliability and reproducibility. In particular, the nanostructures 1a are used as optical sensing elements and therefore require no additional handling or electrical contacting. Thereby, the sensing device is a low cost and low energy consumption device. The operation principle of such a sensing device is advantageously reversible with no hysteresis effects. Supplementary, the sensing device is extremely sensitive.

Figure 2 shows a gas sensing device wherein, in contrast to figure 1, the nanostructures 1a of the gas detecting unit 1 differ. In particular, the nanostructures 1a are at least partially modified in a different way. Due to the different modification, the gas sensing device is capable of detecting different gas molecules whereby the sensitivity of such a device can advantageously increase. Therewith, one single gas sensing device can be used for different gas detection.
The gas sensing device comprises one type of nanostructure as shown in FIG. 1 or combination of different types of nanostructures as shown in Fig. 2. For example, the nanostructures 1a are GaN nanostructures, GaN nanostructures with an incorporation of Indium, heterostructures and/or core shell nanostructures.
The nanostructures 1a of figure 2 from left to right are as follows: GaN nanostructure, InGaN nanostructure on top of GaN nanostructure, core-shell InGaN/GaN nanostructure, core-shell GaN/InGaN/GaN nanostructure and (In,Ga)N heterostructure.
Alternatively, the nanostructures can be InGaN/InGaN and (AlₓIn_{y}Ga_{1-x-y}N) -heterostructures and/or (AlₓIn_{y}Ga_{1-x-y}N) quantum dots with x ≤ x+y ≤ 1 or other III-V and/or II-VI material based quantum dots.

For the rest, the gas sensing device of figure 2 is substantially equal to the gas sensing device of figure 1.

Figure 3 shows an example of a gas sensing device 10 wherein, in contrast to figure 1, the gas detecting unit 1 is directly attached to the top surface of the light-emitting diode chip 2. In particular, the light-emitting diode chip 2 is used as a carrier or pseudosubstrate for the array of nanostructures 1a.

The array of nanostructures 1a comprises both GaN nanostructures and InGaN nanostructures on top of GaN nanostructures for different gas molecule detection.

The photodetector 4 is, in contrast to figure 1, directly attached to the gas detecting unit 1 with a frame 4b leaving space for gas to be exposed to the nanostructures 1a. The frame 4b is attached to the transparent substrate 1b of the gas detecting unit 1 extending through the nanostructures 1a. Thereby, a predetermined distance between the photodetector and the nanostructures can be provided wherein the distance can be filled with ambient air. The gas concentration of the ambient air can thereby be measured by the gas sensing device.

For the rest, the example of the gas sensing device of figure 3 is substantially equal to the gas sensing device of figure 1.
Figure 4 shows an embodiment of a gas sensing device 10 wherein, in contrast to figure 3, the gas detecting unit 1 is arranged in a distance D to the light-emitting diode chip 2. Light 2b emitted by the light emitting diode chip 2 penetrates the distance D and the transparent substrate 1b of the light detecting unit 1. Subsequently, the penetrated light passes the nanostructures and potentially leads to a photo-induced adsorption of gas molecules from the ambience on the surfaces of the nanostructures 1a. The light intensity being afterwards detected by the photodetector shows the gas concentration of the ambience.

For the rest, the example of the gas sensing device of figure 4 is substantially equal to gas sensing device of figure 3.

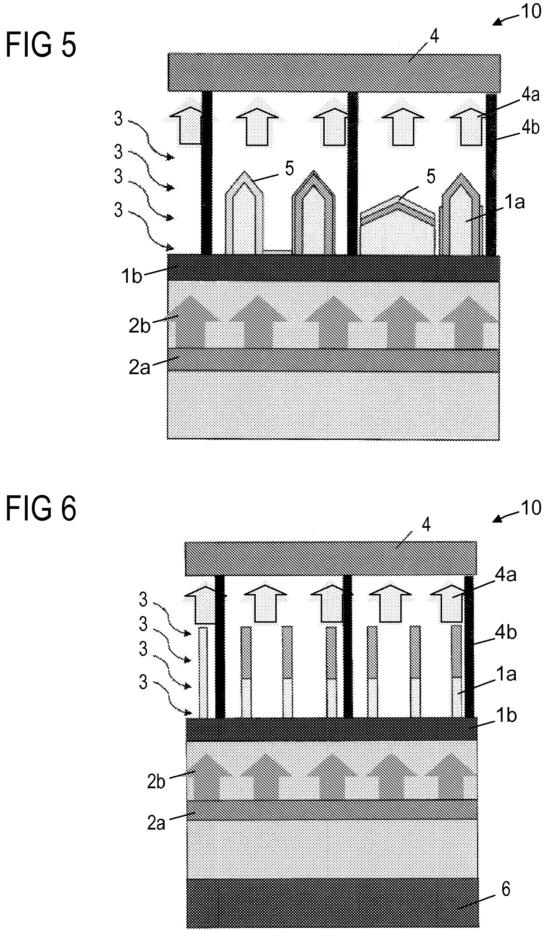

Figure 5 shows another example of a gas sensing device 10 wherein, in contrast to figure 3, the modification of the nanostructures 1a of the gas detecting unit 1 differs. The nanostructures 1a are pyramidal shaped GaN, InGaN and/or core-shell structures being partially or completely coated with a metal thin film 5. The metal thin film 5 comprises a thickness between 0 nm and 1000 nm. Due to the metal thin film 5, the selectivity of gas species or groups of gases to be detected can be advantageously altered and/or enhanced. The metal thin film can also be arranged between the nanostructures on top of the transparent substrate 1b.

For the rest, the example of the gas sensing device of FIG. 5 is substantially equal to the gas sensing device of FIG. 3.

Figure 6 shows a further example of a gas sensing device 10 wherein, in contrast to figure 3, a heating unit 6 is attached to the light-emitting diode chip 2. In particular, the heating unit 6 is arranged on the side of the chip 2 opposite to the gas detecting unit 1. The additional heating unit 6 can increase the gas sensing device temperature whereby an operation of the device 10 at different temperatures is possible. Due to the different operation temperatures, the chemical adsorption properties of the nanostructures 1a can be modified.

The heating unit 6 is thermally coupled to the nanostructures 1a. The heating unit 6 is thereby not necessarily placed directly at the nanostructures.

The nanostructures of the example of FIG. 6 are, for example, InGaN nanostructures arranged on top of, for example, GaN nanostructures. For the rest, the embodiment of the gas sensing device of FIG. 6 is substantially equal to the example of the gas sensing device of FIG. 3.

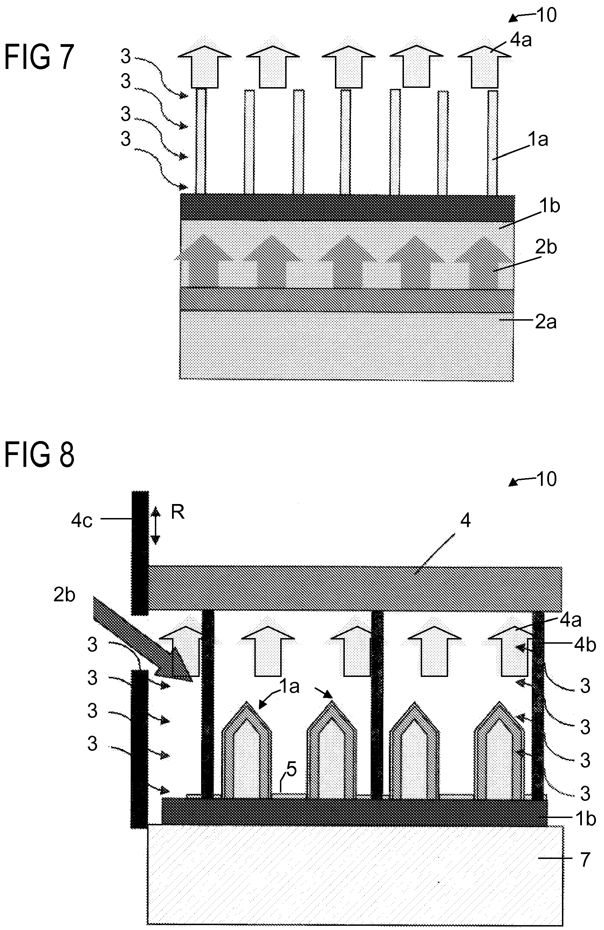

Figure 7 shows a further gas sensing device 10 wherein in contrast to figure 1 no photodetector is provided.
The nanostructures 1a are arranged on the transparent substrate 1b which is directly arranged on the top surface of the light-emitting diode chip 2. The nanostructures 1a are GaN based nanostructures. Due to a strong modification of spectrum of light emitted by the device after passing the nanostructures based on the photo-induced adsorption of gas species on surface of the nanostructures, the broad intensity change is visible by human eye. Therefore, no photodetector is needed. The difference can be easily seen by the human eye.
After the light-emitting diode chip 2 is turned off, the gas adsorption of gas species to the surface of the nanostructures is inhibited. Thereby, the light signal starts at maximum when the light-emitting diode chip 2 is switched on and decreases under gas exposure to, for example, approximately 10 % of original intensity wherein the decrease depends on gas concentration of the ambience.
The light-emitting diode chip 2 can be battery driven.

For the rest, the gas sensing device of FIG. 7 is substantially equal to the gas sensing device of FIG. 1.

Figure 8 shows another example of a gas sensing device 10 wherein, in contrast to figure 3, no light-emitting diode chip is provided. In this case, the gas sensing unit 1 is arranged on a carrier 7 that does not need to be transparent. The carrier 7 can be a rigid or flexible carrier.
The nanostructures 1a are core-shell nanostructures or InGaN/GaN heterostructures for high differential signal gain. A metal film 5 can be deposited between the nanostructures. The metal film 5 preferably has a high reflection.
The light for the photo-induced adsorbing process for the gas detection is applied from an ambient light 2b, preferably from the environment, for example from an external UV lamp, blue LED or laser source having an adequate wavelength. The ambient light can reach the nanostructures so that the adsorption process can be provided.
To optically exclude the ambient light 2b from direct detection by the photodetector 4, an optical shutter 4c is provided. Preferably, the optical shutter 4c is moveable in the direction R so that the gas detecting unit 1 can get closed.

Some of the remaining features of the gas sensing device of FIG. 8 are substantially the same as shown in Fig. 3.

## Claims

1. An optical gas sensing device (10) comprising a gas detecting unit (1) wherein the gas detecting unit (1) comprises an array of semiconductor based nanostructures (la), the nanostructures (1a) each having a surface which is capable of photo-induced adsorbing of gas molecules on said surface of the nanostructures (la), leading to a non-radiative surface-related recombination, whereby light passing through the gas detecting unit (1) optically excites the nanostructures (1a) to emit photoluminescence,
the device (10) further comprising a semiconductor based light-emitting diode chip (2) with at least one active region (2a) which emits electro-magnetic radiation (2b) during operation of the light-emitting diode chip (2), and
the device (10) further comprises a photodetector (4) detecting the photoluminescence response of the semiconductor-based nanostructures (1a) upon their exposure to gases during operation of the gas sensing device (10), wherein the nanostructures (1a) are arranged between the light-emitting diode chip (2) and the photodetector (4), and wherein the photodetector (4) is attached to the gas detecting unit (1) with a frame (4b) leaving space between the photodetector and the nanostructures for gas to be exposed to the nanostructures (1a).

2. The gas sensing device according to the preceding claim, wherein
a mean diameter (D) of the nanostructures (1a) is between 2 nm and 100 nm and a length (L) of the nanostructures (1a) is between 2 nm and 5000 nm, and the nanostructures (1a) are electrically inactive and there is no electrical contact direct at the nanostructures (1a).

3. The gas sensing device according to claim 1 or 2, wherein
the nanostructures (1b) are epitaxially grown onto a top surface of the light-emitting diode chip (2), so that the light-emitting diode chip (2) is used as a substrate for the array of nanostructures (1a).

4. The gas sensing device according to claim 1, 2 or 3, wherein
the array of nanostructures (1a) and the light-emitting diode chip (2) are monolithically-integrated with each other.

5. The gas sensing device according to claim 1 or 2, wherein the array of nanostructures (1a) is arranged on a transparent substrate (1b).

6. The gas sensing device according to one of the preceding claims, wherein
the light-emitting diode chip (2) is an InGaN chip emitting UV-light and/or blue light.

7. The gas sensing device according to one of the preceding claims, wherein
the array of nanostructures (1a) comprises at least two different modifications of nanostructures for different gas detection.

8. The gas sensing device according to one of the preceding claims, wherein
the nanostructures (1a) are based on GaN or InGaN.

9. The gas sensing device according to one of the preceding claims, wherein
the nanostructures (1a) are heterostructures, core shell structures or metal-coated structures.

10. The gas sensing device according to one of the preceding claims, wherein
the photodetector (4) is a Si diode or a GaAs diode being sensitive for UV and/or blue light.

11. The gas sensing device according to one of the preceding claims, further comprising:
a metal film (5) being deposited between at least two of the nanostructures (1a) or coating the nanostructures (1a).

12. The gas sensing device according to the preceding claim and according to claim 3 or 5, wherein
the metal film (5) is attached to the substrate in each gap between the nanostructures (1a).

13. The gas sensing device according to one of the preceding claims, further comprising:
a heating unit (6) for increasing the operation temperature of the gas sensing device (1).

## Patentansprüche

1. Optische Gaserfassungseinrichtung (10), umfassend eine Gasdetektionseinheit (1), wobei die Gasdetektionseinheit (1) ein Array aus halbleiterbasierten Nanostrukturen (1a) umfasst, wobei die Nanostrukturen (1a) jeweils eine Oberfläche aufweisen, die zur photoinduzierten Adsorption von Gasmolekülen auf der Oberfläche der Nanostrukturen (1a) fähig ist, was zu einer strahlungslosen oberflächenbezogenen Rekombination führt, wobei durch die Gasdetektionseinheit (1) tretendes Licht die Nanostrukturen (1a) optisch zur Emission von Photolumineszenz anregt, wobei die Einrichtung (10) ferner einen halbleiterbasierten Leuchtdiodenchip (2) mit mindestens einem aktiven Bereich (2a), der während des Betriebs des Leuchtdiodenchips (2) elektromagnetische Strahlung (2b) emittiert, umfasst, und die Einrichtung (10) ferner einen Photodetektor (4) umfasst, der die Photolumineszenzantwort der halbleiterbasierten Nanostrukturen (1a) bei ihrer Aussetzung gegenüber Gasen während des Betriebs der Gaserfassungseinrichtung (10) detektiert, wobei die Nanostrukturen (1a) zwischen dem Leuchtdiodenchip (2) und dem Photodetektor (4) angeordnet sind, und wobei der Photodetektor (4) mit einem Rahmen (4b) an der Gasdetektionseinheit (1) befestigt ist, wobei zwischen dem Photodetektor und den Nanostrukturen Raum für Gas, das den Nanostrukturen (1a) ausgesetzt werden soll, gelassen wird.

2. Gaserfassungseinrichtung nach dem vorhergehenden Anspruch, wobei ein mittlerer Durchmesser (D) der Nanostrukturen (1a) zwischen 2 nm und 100 nm beträgt und eine Länge (L) der Nanostrukturen (1a) zwischen 2 nm und 5000 nm beträgt und die Nanostrukturen (1a) elektrisch inaktiv sind und kein elektrischer Kontakt direkt an den Nanostrukturen (1a) besteht.

3. Gaserfassungseinrichtung nach Anspruch 1 oder 2, wobei die Nanostrukturen (1a) epitaktisch auf eine obere Oberfläche des Leuchtdiodenchips (2) aufgewachsen sind, so dass der Leuchtdiodenchip (2) als Substrat für das Array aus Nanostrukturen (1a) verwendet wird.

4. Gaserfassungseinrichtung nach Anspruch 1, 2 oder 3, wobei das Array aus Nanostrukturen (1a) und der Leuchtdiodenchip (2) monolithisch miteinander integriert sind.

5. Gaserfassungseinrichtung nach Anspruch 1 oder 2, wobei das Array aus Nanostrukturen (1a) auf einem transparenten Substrat (1b) angeordnet ist.

6. Gaserfassungseinrichtung nach einem der vorhergehenden Ansprüche, wobei der Leuchtdiodenchip (2) ein InGaN-Chip ist, der UV-Licht und/oder blaues Licht emittiert.

7. Gaserfassungseinrichtung nach einem der vorhergehenden Ansprüche, wobei das Array aus Nanostrukturen (1a) mindestens zwei unterschiedliche Modifizierungen von Nanostrukturen für Detektion von unterschiedlichen Gasen umfasst.

8. Gaserfassungseinrichtung nach einem der vorhergehenden Ansprüche, wobei die Nanostrukturen (1a) auf GaN oder InGaN basieren.

9. Gaserfassungseinrichtung nach einem der vorhergehenden Ansprüche, wobei die Nanostrukturen (1a) Heterostrukturen, Kern-Schale-Strukturen oder mit Metall beschichtete Strukturen sind.

10. Gaserfassungseinrichtung nach einem der vorhergehenden Ansprüche, wobei der Photodetektor (4) eine Si-Diode oder eine GaAs-Diode ist, die UV-Licht und/oder blauem Licht gegenüber empfindlich ist.

11. Gaserfassungseinrichtung nach einem der vorhergehenden Ansprüche, ferner umfassend: einen Metallfilm (5), der zwischen mindestens zwei der Nanostrukturen (1a) abgeschieden oder auf den Nanostrukturen (1a) aufgetragen ist.

12. Gaserfassungseinrichtung nach dem vorhergehenden Anspruch und nach Anspruch 3 oder 5, wobei der Metallfilm (5) in jedem Spalt zwischen den Nanostrukturen (1a) am Substrat befestigt ist.

13. Gaserfassungseinrichtung nach einem der vorhergehenden Ansprüche, ferner umfassend: eine Heizeinheit (6) zum Erhöhen der Betriebstemperatur der Gaserfassungseinrichtung (1).

## Revendications

1. Dispositif de détection de gaz optique (10) comprenant une unité de détection de gaz (1), l'unité de détection de gaz (1) comprenant un réseau de nanostructures à base de semi-conducteurs (la), les nanostructures (1a) ayant chacune une surface qui est capable d'adsorption photoinduite de molécules de gaz sur ladite surface des nanostructures (la), conduisant à une recombinaison associée à la surface non rayonnante, la lumière traversant l'unité de détection de gaz (1) excitant ainsi optiquement les nanostructures (1a) pour qu'elles émettent une photoluminescence, le dispositif (10) comprenant en outre une puce à diode électroluminescente à base de semi-conducteurs (2) avec au moins une région active (2a) qui émet un rayonnement électromagnétique (2b) pendant le fonctionnement de la puce à diode électroluminescente (2), et le dispositif (10) comprenant également un photodétecteur (4) détectant la réponse de photoluminescence des nanostructures à base de semi-conducteurs (1a) lors de leur exposition à des gaz pendant le fonctionnement du dispositif de détection de gaz (10), les nanostructures (1a) étant disposées entre la puce à diode électroluminescente (2) et le photodétecteur (4), et le photodétecteur (4) étant attaché à l'unité de détection de gaz (1) avec un cadre (4b) laissant de l'espace entre le photodétecteur et les nanostructures pour que du gaz soit exposé aux nanostructures (1a).

2. Dispositif de détection de gaz selon la revendication précédente, dans lequel
un diamètre moyen (D) des nanostructures (1a) se situe entre 2 nm et 100 nm et une longueur (L) des nanostructures (1a) se situe entre 2 nm et 5000 nm, et les nanostructures (1a) sont électriquement inactives et il n'y a pas de contact électrique direct au niveau des nanostructures (1a).

3. Dispositif de détection de gaz selon la revendication 1 ou 2, dans lequel
les nanostructures (1a) sont élaborées par épitaxie sur une surface supérieure de la puce à diode électroluminescente (2), de telle sorte que la puce à diode électroluminescente (2) est utilisée comme substrat pour le réseau de nanostructures (1a).

4. Dispositif de détection de gaz selon la revendication 1, 2 ou 3, dans lequel
le réseau de nanostructures (1a) et la puce à diode électroluminescente (2) sont intégrés l'un à l'autre de façon monolithique.

5. Dispositif de détection de gaz selon la revendication 1 ou 2, dans lequel le réseau de nanostructures (1a) est disposé sur un substrat transparent (1b).

6. Dispositif de détection de gaz selon une des revendications précédentes, dans lequel
la puce à diode électroluminescente (2) est une puce InGaN émettant un rayonnement UV et/ou une lumière bleue.

7. Dispositif de détection de gaz selon une des revendications précédentes, dans lequel
le réseau de nanostructures (1a) comprend au moins deux variantes différentes de nanostructures pour la détection de différents gaz.

8. Dispositif de détection de gaz selon une des revendications précédentes, dans lequel
les nanostructures (1a) sont basées sur du GaN ou de l'InGaN.

9. Dispositif de détection de gaz selon une des revendications précédentes, dans lequel
les nanostructures (1a) sont des hétérostructures, des structures coeur-coquille ou des structures recouvertes de métal.

10. Dispositif de détection de gaz selon une des revendications précédentes, dans lequel
le photodétecteur (4) est une diode Si ou une diode GaAs sensible au rayonnement UV et/ou à la lumière bleue.

11. Dispositif de détection de gaz selon une des revendications précédentes, comprenant en outre :
un film métallique (5) déposé entre au moins deux des nanostructures (1a) ou recouvrant les nanostructures (1a).

12. Dispositif de détection de gaz selon la revendication précédente et selon la revendication 3 ou 5, dans lequel
le film métallique (5) est attaché au substrat dans chaque interstice entre les nanostructures (1a).

13. Dispositif de détection de gaz selon une des revendications précédentes, comprenant en outre :
une unité de chauffage (6) destinée à augmenter la température de fonctionnement du dispositif de détection de gaz (1).
